# EUROPEAN PATENT APPLICATION

(11) **EP 4 113 367 A1**
(43) Date of publication of application: **04.01.2023**
(21) Application number: 21183160.7
(22) Date of filing: 01.07.2021
(51) Int. Cl.: G06K 9/00

(54) **PREDICTING VEHICLE STATE VARIABLES BASED ON FUSION WITH VIDEO FRAMES**

(71) Applicant: Robert Bosch GmbH, 70442 Stuttgart (DE)
(72) Inventor: Di Castro, Dotan, 3440619 Haifa (IL); Kosman, Eitan, Haifa (IL)

(57) **Abstract**

A method (100) for predicting one or more future values (51*) of at least one state variable (51) of a vehicle (50), comprising the steps of:
• providing (110) a sequence (1) of video frames captured by at least one camera carried by the vehicle (50);
• providing (120) a sequence (2) of values (51#) of at least one state variable (51) of the vehicle (50);
• encoding (130) the sequence (1) of video frames into a first compressed representation (3);
• encoding (140) the sequence (2) of values (51#) of the at least one state variable (51) into a second compressed representation (4); and
• mapping (150), by means of at least one trained machine learning model (5), the compressed representations (3, 4) to the sought one or more future values (51*) of at least one state variable (51) of the vehicle (50).

## Description

The present invention relates to the prediction of vehicle state variables that may, for example, be used by driving assistance systems or other vehicle control systems.

### Background

Many driving assistance systems rely on predictions of state variables of the vehicle. For example, an emergency braking assistant system detects if the vehicle is in danger of colliding with an object. If the driver does not avert this danger in time by braking the vehicle, the system automatically actuates the brakes.

DE 10 2019 214 430 A1 discloses a system for assessing the dynamic state of a vehicle. Based on current and/or past sensor readings, a machine learning module predicts the stability of the state of the vehicle.

### Disclosure of the invention

The invention provides a method for predicting one or more future values of at least one state variable of a vehicle.

In the course of this method, a sequence of video frames captured by at least one camera carried by the vehicle is provided. A sequence of values of at least one state variable of the vehicle is also provided. These one or more state variables may be, or comprise, the state variables whose future values are being sought. But this is not required.

The sequence of video frames is encoded into a first compressed representation. Likewise, the sequence of values of the at least one state variable is encoded into a second compressed representation. By means of at least one trained machine learning model, the compressed representations are mapped to the sought one or more future values of at least one state variable of the vehicle.

In particular, the machine learning model may be, or comprise, a parametrized function whose behavior is characterized by a set of trainable parameters and, by virtue of the training of the parameters, has a great power to generalize to unseen data. Neural networks are prime examples of such machine learning models.

The input to the at least one machine learning model is a bi-modal temporal signal that comprises information from the video frames on top of the past values of state variables of the vehicle. It was discovered that the video frames not only supplement values of state variables, but also contain information on the future development of such state variables. This information may turn a prediction based only on past values of state variables upside down. For example, the past state variables may register an attempt of a driver to accelerate the vehicle, and based on this, there is every reason to predict that the vehicle will accelerate. But then a video stream that looks ahead of the current position of the vehicle registers a traffic light that has just turned red. This will force the driver to abandon the attempt to accelerate the vehicle; rather, the vehicle will have to be stopped. Thus, the fusion of the past state variables with the video frames literally permits a look into the future.

The encoding of the sequence of video frames into the first representation and the encoding of the sequence of values of state variables into the second representation may be performed in any manner that produces a representation with a dimensionality that is lower than the dimensionality of the respective original data. In an advantageous embodiment, this encoding is performed using at least one convolutional neural network. For example, given an input image, a stack of convolutional layers that may optionally also contain pooling layers produces progressively smaller feature maps. In image classifiers, these feature maps are frequently transformed into logits or other classification scores with respect to one or more classes by means of one or more classification layers. Here, only the feature maps are important.

While it is advantageous, it is not required that the encoding be performed using a neural network or any other type of machine learning model. Any other lossy compression algorithm may be used. For example, the video frames, respectively the values of the at least one state variable, may be transformed into a set of wavelet coefficients by wavelet transform. This set of wavelet coefficients may then be compressed by dropping all wavelet coefficients with values below a certain threshold. This is based on the finding that the important parts of a signal are usually concentrated in a few very high wavelet coefficients, whereas white noise is uniformly smeared across all wavelet coefficients.

In one advantageous embodiment, multiple trained machine learning models are provided. The sought one or more future values of the at least one state variable of the vehicle for different points in time are obtained from different trained machine learning models. That is, predictions for a first future point in time are obtained from one machine learning model, whereas predictions for a second, later point in time are obtained from another machine learning model. In this manner, the flexibility for the prediction over different temporal horizons is maximized. In particular, the different machine learning models may learn patterns that occur on different time scales. For example, when a driver changes gears in a vehicle with manual transmission, the speed of the vehicle will decrease while the clutch pedal is pressed and the gear is being changed. Once the new gear is in and the clutch pedal is released, the vehicle will accelerate again.

One example for a trained machine learning model that may be used to predict a future value of a state variable at a particular point in time is a long short-term memory, LSTM. An LSTM is particularly useful for learning transient phenomena.

In a further advantageous embodiment, the sequence of video frames, and/or the sequence of past values of the at least one state variable of the vehicle, is encoded into different compressed representations for use by different trained machine learning model. That is, in essence, the machine learning model on the one hand and the trained encoders on the hand form one unit that may be used to predict the sought value of the state variable at a particular future point in time, and for each desired future point in time, there is one copy of this whole unit. In this manner, needs of the individual machine learning models may be accommodated already when compressing the respective input data. In particular, compression of the data always implies sacrificing some of the data. Therefore, tailoring the part of the data that is kept to the needs of the respective machine improves the overall quality of the obtained prediction.

In a further advantageous embodiment, one and the same trained machine learning model maps the compressed representations to sought future values of the at least one state variable of the vehicle for different points in time. For example, the machine learning model may predict a whole sequence of the sought future values of state variables. This approach does not require any assumptions regarding the input signal. One example of a machine learning model that is usable for this approach is a fully connected neural network, i.e., a neural network with a stack of several fully connected layers.

In a further advantageous embodiment, multiple video sequences of video frames and multiple sequences of values of at least one state variable of the vehicle are provided. These respective multiple sequences relate to different time windows and may be overlapping of non-overlapping. For example, a first time window may comprise times between t-1 and t-5, the second time window may comprise times between t-2 and t-6, and so on.

Each such sequence is encoded into its own compressed representation. The trained machine learning model maps a combination of multiple such compressed representations to the sought one or more future values of at least one state variable of the vehicle. That is, one compressed representation of a video sequence and one compressed representation of a sequence of values form a pair, and multiple such pairs are provided to the machine learning model as input. In this manner, correlated events that have an impact on the predicted values of the at least one state variable may be more adequately considered. For example, when the vehicle crests a hill, there will be phase of powered ascent that is followed by a braked descent.

Consideration of multiple pairs at once means that the individual compressed representations that relate to different time windows are no longer assumed to be completely independent of each other. Rather, it is assumed that the behavior that manifests itself in the respective representations is consistent in itself at least over a certain period of time. Combinations of pairs that would contradict each other are ruled out. This in turn causes the machine learning model to be more compact in the sense that it is characterized by fewer parameters. A more compact model may run faster and with a lesser power consumption, which is particularly advantageous for performing the method on board a vehicle.

For processing of multiple pairs of representations at once, the trained machine learning model may, for example, comprise a combination of a long short-term memory, LSTM, and a fully connected neural network. Herein, the LSTM memorizes the multiple pairs, and the fully connected neural network draws the final conclusion as to the sought values of state variables.

In a particularly advantageous embodiment, the sought state variable of the vehicle comprises one or more of:
- a linear or angular velocity or acceleration;
- an orientation;
- a steering angle.

These quantities are hard to predict on the basis of time series of past values alone. In particular, steering angles may be low or zero most of the time, but escalate to large values when the vehicle needs to change direction. Also, as discussed before, changes to the velocity, acceleration and/or orientation may be dictated by the traffic situation of the vehicle that is evident from the video frames long in advance.

In a further particularly advantageous embodiment, based on the predicted one or more future values of at least one state variable of the vehicle, an actuation signal is determined. The vehicle is actuated with the actuation signal. In this manner, the action performed by the vehicle is more likely to be appropriate in the traffic situation of the vehicle.

In particular, the actuation signal may represent a braking force to be applied to the vehicle. There are many safety applications where it is important to apply an appropriate amount of braking force, but where it is also important not to apply an excessive braking force. For example, if a collision with an object is to be avoided, the vehicle should stop just short of hitting the object. Sudden application of an excessive braking force might come as a surprise to following traffic and cause a rear-end collision.

A further use case is the monitoring of a driver. An analysis of the traffic situation may reveal actions that a driver of the vehicle should take, and it may be determined whether the driver is taking these actions. In the latter case, the driver might be tired, distracted or not paying attention for another reason.

In a further use case, the technical state of the vehicle may be monitored. For example, if the steering angle is zero, then the vehicle should travel in a straight line. But if there is too little air pressure in one of the tires on the front axle, then the video frames may reveal that the vehicle is slightly pulling over to one side.

The invention also provides a method for training a machine learning model for use in the method described above.

In the course of this method, a sequence of values of at least one state variable of a vehicle is provided. This sequence covers a time frame between times t₁ and t₃.

Also, a sequence of video frames captured by at least one camera carried by the vehicle is provided. This sequence covers a time frame between times t₁ and t₂, with t₂ < t₃.

From the part of the sequence of values that covers the time frame between times t₁ and t₂, and from the sequence of video frames, values of the at least one state variable of the vehicle in the time frame between times t₂ and t₃ are predicted. This prediction is performed by the method described above, using the to-be-trained machine learning model.

A difference between the so-predicted values and the corresponding values from the sequence of values is rated by means of a predetermined loss function. Parameters that characterize the behavior of the machine learning model are optimized such that, when further predictions are obtained from this machine learning model, the rating by the loss function is likely to improve.

This training method is a self-supervised training method. Out of the sequence of values of the state variable, only a certain part up to the time t₂ is used as input to the prediction method and the to-be-trained machine learning model that this method uses. The rest of this sequence is held back as "ground truth" to gauge the quality of the prediction. No manual labelling work is necessary.

During training, the video frames, and/or the values of at least one state variable, may be augmented. For example, a new combination of a video frame and a steering angle may be obtained from a given such combination by horizontally flipping the video frame and at the same time multiplying the steering angle (or other steering value) with -1. For example, every already present combination of a video frame and a steering angle may be selected for this processing with a probability of 0.5. Apart from augmenting the training dataset, this technique helps dealing with the skew of the steering angle values.

Furthermore, training samples acquired at vehicle speeds below a predetermined threshold may be avoided and/or discarded. At very low speeds, the steering angle is not informative, so considering such samples might hurt the training.

The methods described above may be wholly or partially computer-implemented, and thus embodied in software. The invention therefore also relates to a computer program, comprising machine-readable instructions that, when executed by one or more computers, cause the one or more computers to perform a method described above. In this respect, control units for vehicles and other embedded systems that may run executable program code are to be understood to be computers as well. A non-transitory storage medium, and/or a download product, may comprise the computer program. A download product is an electronic product that may be sold online and transferred over a network for immediate fulfilment. One or more computers may be equipped with said computer program, and/or with said non-transitory storage medium and/or download product.

In the following, the invention and its preferred embodiments are illustrated using Figures without any intention to limit the scope of the invention.

The Figures show:
Figure 1 Exemplary embodiment of the method 100 for predicting future values 51* of at least one state variable 51 of a vehicle 50;
Figure 2 Exemplary architectures for performing the method 100;
Figure 3 Exemplary embodiment of the method 200 for training a machine learning model 5a-5e.

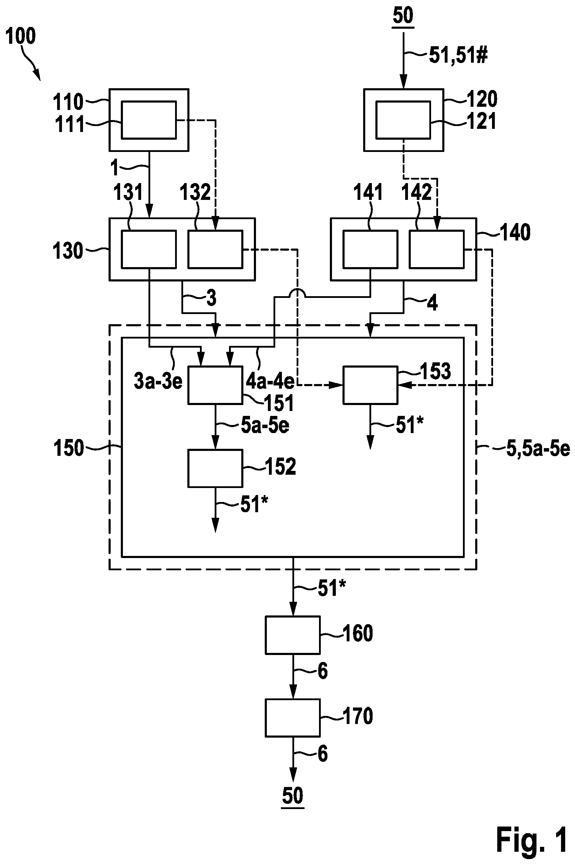

Figure 1 is a schematic flow chart of an embodiment of the method 100 for predicting future values 51* of at least one state variable 51 of a vehicle 50.

In step 110, a sequence 1 of video frames captured by at least one camera carried by the vehicle 50 is provided. In particular, video frames that have been recorded while the camera was looking in the direction of travel of the vehicle 50 may be used. But this may also be augmented with other camera perspectives.

In step 120, a sequence 2 of values 51# of at least one state variable 51 of the vehicle 50 is provided.

In step 130, the sequence 1 of video frames is encoded into a first compressed representation 3. For example, 3D convolutions on an MFNET-3D backbone may be used for this purpose. In one example, video information from a time interval of 0.8 seconds at 12.5 frames per second is condensed from an 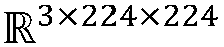 tensor to an 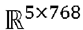 representation.

In step 140, the sequence 2 of values 51# of the at least one state variable 51 into a second compressed representation 4. For example, 1D convolutions may be used. For example, the state variables may be sampled from the CAN bus of the vehicle 50 at a rate of 10 Hz, so that 10 samples are produced within a time interval of 1 second. The convolution may, for example, be performed with a 3-layer convolutional neural network with an increasing number of channels 2→4→8→16 and ReLU activations between every two convolutional layers. Each 1D convolutional layer may be parametrized with a stride of 2 steps in the temporal dimension and zero-padded by one entry. The 10 samples may thus be condensed to an 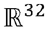 representation.

In step 150, by means of at least one trained machine learning model 5, the compressed representations 3, 4 are mapped to the sought one or more future values 51* of at least one state variable 51 of the vehicle 50.

According to block 151, multiple trained machine learning models 5a-5e may be provided. According to block 152, the sought one or more future values 51* of the at least one state variable 51 of the vehicle 50 for different points in time may then be obtained from different trained machine learning models 5a-5e.

According to blocks 131 and 141, the sequence 1 of video frames, and/or the sequence 2 of past values 51# of the at least one state variable 51 of the vehicle 50, may be encoded into different compressed representations 3, 3a-3e; 4, 4a-4e for use by different trained machine learning models 5a-5e.

According to blocks 111 and 121, multiple sequences 1 of video frames and multiple sequences 2 of values 51* of at least one state variable 51 of the vehicle 50 that relate to different time windows may be provided. Each such sequence 1, 2 may be encoded to a compressed representation 3, 4 according to blocks 132 and 142. According to block 153, the trained machine learning model 5 may then map a combination of multiple such compressed representations 3, 4 to the sought one or more future values 51* of at least one state variable 51 of the vehicle 50.

In step 160, an actuation signal 6 is determined based on the predicted one or more future values 51* of at least one state variable 51 of the vehicle 50. In step 170, the vehicle 50 is actuated with this actuation signal 6.

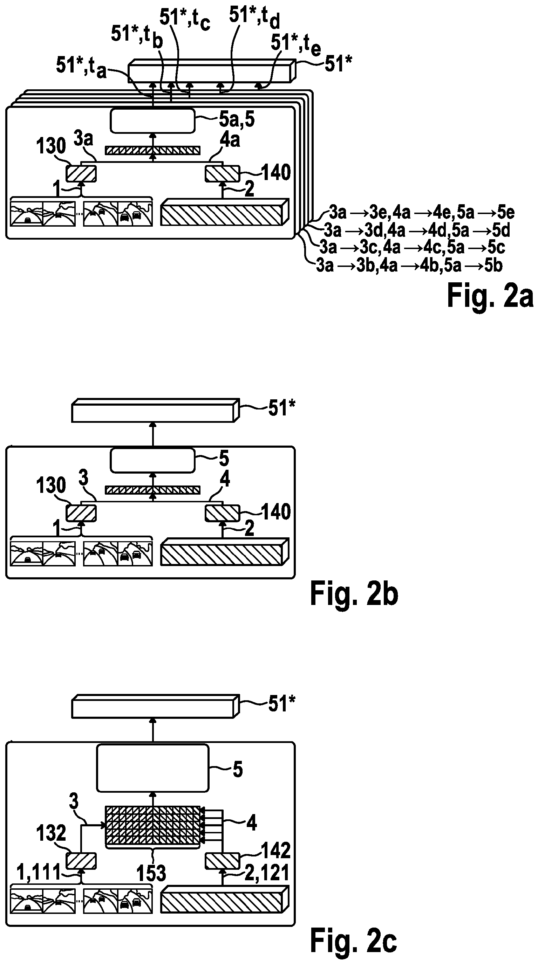

Figure 2 shows some exemplary architectures for performing the method 100.

Figure 2a shows a first architecture that uses separate machine learning models 5a-5e to determine future values 51*,tₐ-tₑ of the state variable 51 at different points in time tₐ-tₑ. In the embodiment shown in Figure 2a, each machine learning model 5a-5e gets its own version 3a-3e of the representation 3, and its own version 4a-4e of the representation 4, as input. Optionally, the representations 3a-3e, 4a-4e may be flattened before they are inputted into the machine learning model 5a-5e. One exemplary architecture for the machine learning model 5a-5e consists of two fully-connected heads implemented by a 3-layer fully connected neural network with a geometrically decreasing number of neurons 3872→246→15→1.

Figure 2b shows a second architecture that uses only one machine learning model 5 to predict all sought future values 51* of the state variable 51. Again, the representations 3, 4 may be flattened before being inputted to the machine learning model 5. One exemplary architecture for the machine learning model 5 consists of two fully-connected heads, each of which is implemented by a 3-layer fully connected neural network with a geometrically decreasing number of neurons 3872→421→45→5.

Figure 2c shows a third architecture. Compared with Figure 2b, multiple sequences 1 and 2 have been provided according to blocks 111 and 121. Each such sequence 1, 2 is encoded to a compressed representation 3, 4 according to blocks 132, 142. According to block 153, multiple pairs, each containing one representation 3 of the video sequence 1 and one representation 4 of the value sequence 2, are mapped to the sought one or more future values 51* of at least one state variable 51 by one machine learning model 5. One exemplary architecture for this machine learning model 5 starts with a fully connected layer that reduces the dimension of the input by half. Next, two LSTM layers with hidden dimensions 64 and 32 follow, and the resulting sequence from the last LSTM layer is fed into a two-layer fully connected network with a decreasing number of neurons 32→16→2.

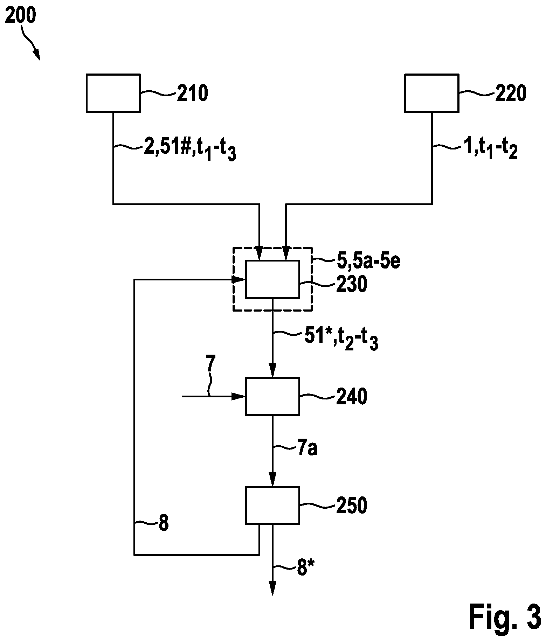

Figure 3 is a schematic flow chart of an embodiment of the method 200 for training a machine learning model 5, 5a-5e for use in the method 100.

In step 210, a sequence 2 of values 51# of at least one state variable of a vehicle 50 is provided. This sequence 2 covers a time frame between times t₁ and t₃.

In step 220, a sequence 1 of video frames captured by at least one camera carried by the vehicle 50 is provided. This sequence 1 covers a time frame between times t₁ and t₂, with t₂ < t₃.

In step 230, values 51* of the at least one state variable 51 of the vehicle 50 in the time frame between times t₂ and t₃ are predicted from the part of the sequence 2 of values 51# that covers the time frame between times t₁ and t₂, and from the sequence 1 of video frames. This prediction is performed according to the method 100 as described above, using the to-be-trained machine learning model 5, 5a-5e.

In step 240, a difference between the so-predicted values 51* and the corresponding values 51# from the sequence 2 of values 51# is rated by means of a predetermined loss function 7.

In step 250, parameters 8 that characterize the behavior of the machine learning model 5, 5a-5e are optimized such that, when further predictions 51* are obtained from this machine learning model 5, 5a-5e, the rating 7a by the loss function 7 is likely to improve. The finally trained state of the parameters is labelled with the reference sign 8*.

## Claims

1. A method (100) for predicting one or more future values (51*) of at least one state variable (51) of a vehicle (50), comprising the steps of:
• providing (110) a sequence (1) of video frames captured by at least one camera carried by the vehicle (50);
• providing (120) a sequence (2) of values (51#) of at least one state variable (51) of the vehicle (50);
• encoding (130) the sequence (1) of video frames into a first compressed representation (3);
• encoding (140) the sequence (2) of values (51#) of the at least one state variable (51) into a second compressed representation (4); and
• mapping (150), by means of at least one trained machine learning model (5), the compressed representations (3, 4) to the sought one or more future values (51*) of at least one state variable (51) of the vehicle (50).

2. The method (100) of claim 1, further comprising:
• providing (151) multiple trained machine learning models (5, 5a-5e); and
• obtaining (152) the sought one or more future values (51*) of the at least one state variable (51) of the vehicle (50) for different points in time from different trained machine learning models (5a-5e).

3. The method (100) of claim 2, further comprising: encoding (131, 141) the sequence (1) of video frames, and/or the sequence (2) of past values (51#) of the at least one state variable (51) of the vehicle (50), into different compressed representations (3, 3a-3e; 4, 4a-4e) for use by different trained machine learning models (5a-5e).

4. The method (100) of any one of claims 2 to 3, wherein at least one trained machine learning model (5a-5e) comprises a long short-term memory, LSTM.

5. The method (100) of any one of claims 1 to 4, further comprising: mapping (153), by one and the same trained machine-learning model (5), the compressed representations (3, 4) to sought future values (51*) of the at least one state variable (51) of the vehicle (50) for different points in time.

6. The method (100) of claim 5, further comprising:
• providing (111, 121) multiple sequences (1) of video frames and multiple sequences (2) of values (51#) of at least one state variable (51) of the vehicle (50) that relate to different time windows;
• encoding (132, 142) each such sequence (1, 2) to a compressed representation (3, 4); and
• mapping (153), by the trained machine learning model (5), a combination of multiple such compressed representations (3, 4) to the sought one or more future values (51*) of at least one state variable (51) of the vehicle (50).

7. The method (100) of any one of claims 5 to 6, wherein at least one trained machine learning model (5) comprises a combination of a long short-term memory, LSTM, and a fully connected neural network.

8. The method (100) of any one of claims 1 to 7, wherein the encoding (130, 140) of the sequence (1) of video frames, and/or of the sequence (2) of values of the at least one state variable, is performed (132, 142) using at least one convolutional neural network.

9. The method (100) of any one of claims 1 to 8, wherein the sought state variable (51) of the vehicle (50) comprises one or more of:
• a linear or angular velocity or acceleration;
• an orientation;
• a steering angle.

10. The method (100) of any one of claims 1 to 9, further comprising:
• determining (160), based on the predicted one or more future values (51*) of at least one state variable (51) of the vehicle (50), an actuation signal (6); and
• actuating (170) the vehicle (50) with the actuation signal (6).

11. The method (100) of claim 10, wherein the actuation signal (6) represents a braking force to be applied to the vehicle (50).

12. A method (200) for training a machine learning model (5, 5a-5e) for use in the method (100) of any one of claims 1 to 11, comprising the steps of:
• providing (210) a sequence (2) of values (51#) of at least one state variable of a vehicle, this sequence (2) covering a time frame between times t₁ and t₃;
• providing (220) a sequence (1) of video frames captured by at least one camera carried by the vehicle (50), this sequence (1) covering a time frame between times t₁ and t₂, with t₂ < t₃;
• predicting (230), from the part of the sequence (2) of values (51#) that covers the time frame between times t₁ and t₂, and from the sequence (1) of video frames, using the to-be-trained machine learning model (5, 5a-5e), by the method (100) of any one of claims 1 to 11, values (51*) of the at least one state variable (51) of the vehicle (50) in the time frame between times t₂ and t₃;
• rating (240) a difference between the so-predicted values (51*) and the corresponding values (51#) from the sequence (2) of values (51#) by means of a predetermined loss function (7); and
• optimizing (250) parameters (8) that characterize the behavior of the machine learning model (5, 5a-5e) such that, when further predictions (51*) are obtained from this machine learning model (5, 5a-5e), the rating (7a) by the loss function (7) is likely to improve.

13. A computer program, comprising machine-readable instructions that, when executed by one or more computers, cause the one or more computers to perform a method of any one of claims 1 to 12.

14. A non-transitory storage medium and/or a download product with the computer program of claim 13.

15. One or more computers with the computer program of claim 13, and/or with the non-transitory storage medium and/or download product of claim 14.

## Amended claims

### Amended claims in accordance with Rule 137(2) EPC.

1. An aerosol-generating device for heating an aerosol-forming substrate to generate an inhalable aerosol during a usage session, the aerosol-generating device comprising:
control electronics;
an outer lighting array partially or wholly surrounding an inner lighting array;
in which the control electronics are coupled to the outer and inner lighting arrays and configured to:
i) selectively activate one of the outer and inner lighting arrays to generate a first predetermined light emission conveying first data indicative of a state of the aerosol-generating device;
and
ii) selectively activate the other of the outer and inner lighting arrays to generate a second predetermined light emission conveying second data indicative of a state of the aerosol-generating device, wherein the first data and the second data are different from one another.

2. An aerosol-generating article according to claim 1, in which the first and second data are indicative of any two of:
a) a power source of the aerosol-generating device containing sufficient energy to complete a single usage session;
b) a power source of the aerosol-generating device containing sufficient energy to complete two or more usage sessions;
c) a power source of the aerosol-generating device containing a level of energy below a predetermined threshold level of energy;
d) selection or activation of one of a first predetermined thermal profile and a second predetermined thermal profile, in which each of the first and second predetermined thermal profiles define a heating profile for heating of the aerosol-forming substrate by an electrical heating arrangement over the usage session, the first and second predetermined thermal profiles being different to each other;
e) the aerosol-generating device being in one of a pause mode state or a reactivation state;
f) selection or activation of a change in operational state of the aerosol-generating device;
g) progression through the usage session; and
h) progression through a pre-heating phase in which an electrical heating arrangement is heated to a predetermined target temperature.

3. An aerosol-generating device according to either one of claim 1 or claim 2, in which the outer lighting array circumscribes at least 50%, or preferably at least 60%, or preferably at least 70%, or preferably at least 80%, or preferably at least 90%, or preferably all of the perimeter of the inner lighting array.

4. An aerosol-generating device according to any one of the preceding claims, in which the first data relates to a state of progression of an operational phase of the aerosol-generating device, the second data relates to a different state of the aerosol-generating device, the first predetermined light emission is a predetermined phase progression light emission, and the second predetermined light emission is a predetermined state light emission;
wherein the control electronics are configured to:
i) selectively activate one of the outer and inner lighting arrays to generate the predetermined phase progression light emission indicative of and in response to progression of the operational phase of the aerosol-generating device;
and
ii) selectively activate the other of the outer and inner lighting arrays to generate the predetermined state light emission indicative of and in response to the different state of the aerosol-generating device.

5. An aerosol-generating device according to claim 4, in which the operational phase is the usage session.

6. An aerosol-generating device according to either one of claim 4 or claim 5, in which the control electronics are configured to:
i) selectively activate the outer lighting array to generate the predetermined phase progression light emission;
and
ii) selectively activate the inner lighting array to generate the predetermined state light emission.

7. An aerosol-generating device according to any one of claims 4 to 6, in which the control electronics are configured to progressively reduce an activated area or an activated length of one of the outer lighting array and the inner lighting array with progression through the operational phase of the aerosol-generating device to generate the predetermined phase progression light emission.

8. An aerosol-generating device according to any one of claims 4 to 7, in which the control electronics are configured to progressively increase an activated area or an activated length of one of the outer lighting array and the inner lighting array with progression through the operational phase of the aerosol-generating device to generate the predetermined phase progression light emission.

9. An aerosol-generating device according to any one of the preceding claims, in which one or each of the outer lighting array and the inner lighting array is an arcuate segment extending around an arc of at least 180 degrees.

10. An aerosol-generating device according to claim 9, in which the arcuate segment extends around an arc of 360 degrees to define a closed annulus.

11. An aerosol-generating device according to either one of claim 9 or claim 10, in which the control electronics are configured to progressively reduce an activated length of the arcuate segment with progression through the operational phase of the aerosol-generating device to generate the predetermined phase progression light emission.

12. An aerosol-generating device according to either one of claim 9 or claim 10, in which the control electronics are configured to progressively increase an activated length of the arcuate segment with progression through the operational phase of the aerosol-generating device to generate the predetermined phase progression light emission.

13. An aerosol-generating device according to any one of the preceding claims, in which a predetermined area of the inner lighting array defines a predetermined shape, the control electronics configured to activate the predetermined area defining the predetermined shape to generate either of the first predetermined light emission or the second predetermined light emission.

14. An aerosol-generating device according to any one of the preceding claims, the aerosol-generating device comprising a touch-activated interface, the touch-activated interface coupled to the control electronics and comprising an activation area contactable by a user's digit so as to provide a user input to the control electronics.

15. An aerosol-generating device according to claim 14, in which the touch-activated interface forms part of a display window of either or both of the outer lighting array and the inner lighting array.

16. An aerosol-generating device according to either one of claim 14 or 15, wherein the touch-activated interface comprises a capacitive panel.
